# EUROPEAN PATENT SPECIFICATION

(11) **EP 3 627 694 B1**
(45) Date of publication and mention of the grant of the patent: **10.07.2024**
(21) Application number: 19197472.4
(22) Date of filing: 16.09.2019
(51) Int. Cl.: B64G 1/44, H02S 20/00, H02S 40/36

(54) **PHOTOVOLTAIC ARRAY STRUCTURE WITH INDEPENDENT MODULES**
PHOTOVOLTAISCHE PANEELSTRUKTUR MIT UNABHÄNGIGEN MODULEN
STRUCTURE DE PANNEAUX PHOTOVOLTAÏQUES AVEC DES MODULES INDÉPENDANTS

(30) Priority: 18.09.2018 IT 201800008693
(43) Date of publication of application: 25.03.2020
(73) Proprietor: Morisco, Federico, 20861 Brugherio (MB) (IT)
(72) Inventor: Morisco, Federico, 20861 Brugherio (MB) (IT)
(74) Representative: Rastelli, Franco

(56) References cited:
- CN-U- 202 487 600
- FR-A1- 2 968 070
- KR-B1- 101 764 542
- US-A1- 2015 159 395

## Description

### BACKGROUND OF THE INVENTION

The present invention concerns a photovoltaic array structure with independent modules.

As is known, a photovoltaic panel is an optoelectronic device, formed of photovoltaic cells, able to convert incident solar energy into electric energy by means of photovoltaic effect, and is typically used as a current generator in a photovoltaic system.

A common photovoltaic panel is formed of a series of photovoltaic cells wired to one another and mounted on a rear supporting surface, generally made of an insulating material with low thermal expansion, such as toughened glass or a polymer.

US 2015/159395 A1 discloses a ballast system for affixing solar panels on the ground or rooftop without causing damage and minimizing pressure to the underlying ground or roof. The ballast comprises tubing made out of steel, aluminum, cement, plastic or the like that can be at least partially filled with ballast material to generate ballast weight. A two-piece clamshell clamping mechanism is provided to create fixed placement attachment points suitable for attachment of structure supporting solar panels.

FR 2 968 070 A1 discloses a buoyant solar panel, and a solar power plant consisting of an assembly of such buoyant solar panels, for use in the field of sea-based or other aquatic environment solar power plants. The solar panel includes a one-piece buoyant structure on which a flat solar energy collector is mounted. The flat panel has a constant thickness and with the shape of a parallelogram. An assembly of several buoyant solar panels may be secured directly to one another by cords, cables or straps to form a solar power plant.

CN 202 487 600 U discloses a solar cell module array comprising a horizontal water surface support framework and a plurality of floating drums which are equipped with solar modules at the top surface thereof. The floating drums are fixedly connected with rod members of the framework via hollow connecting axles which include electrical wiring.

### SUMMARY OF THE INVENTION

The aim of the present invention is to provide a new semirigid and/or totally flexible photovoltaic array structure with independent modules, according to claim 1, said structure being formed of a set of photovoltaic modules electromechanically connected to one another, able to produce electric energy when struck by direct, diffused and reflected solar radiation, and able to guarantee an electrical efficiency equivalent if not superior to that of a traditional photovoltaic panel with continuous surface of equal dimensions and provided with the same type of photovoltaic cells.

The meshes of the photovoltaic array can have a free polygonal shape, determined by the dimensions and particular characteristics of the individual photovoltaic cells to be used for the creation of independent modules forming the photovoltaic array.

In fact, the present invention can use any type of photovoltaic cell: made of silicon (mono-poly crystalline), amorphous silicon (mono or multi-junction) and cells with organic matrix since the manufacturing process of the individual modules does not entail high temperatures (max 50°C).

The photovoltaic array according to the present invention is a self-supporting and floating continuous structure formed of a continuous set of independent and replaceable photovoltaic modules, electromechanically connected to one another so as to create a structure that is continuous but can be freely split up according to the electric power chosen to power the entire system, using specific modules for network connection of the desired portions.

The individual photovoltaic modules that form the array can be provided with diode to annul short-circuit effects due to malfunctioning or breakage of the cell contained in the module, allowing the rest of the system to function without the significant drops in efficiency recorded in the case of breakage of a cell in a traditional photovoltaic panel: the entire string of cells connected to the broken cell stops producing electrical energy, significantly compromising the overall efficiency of the entire panel.

The modularity offered by the photovoltaic array also allows the creation of three-dimensional systems: several photovoltaic arrays superimposed on one another using spherical mechanical joining elements.

In fact, the filiform nature of the invention allows the stratification of several superimposed arrays without shading such as to determine drops in efficiency in the lower layers of the system.

The configurations of the photovoltaic array includes the mixed use of mechanical and electrical joining elements of various natures combined with each other: rigid, semirigid and flexible, to obtain two and three-dimensional absorbing photovoltaic structures with variable geometry, foldable and motorizable, that can be used in the aerospace sector due to their very low friction and absence of mismatching with respect to the angle of incidence of the solar radiation, and in traditional use are a guarantee of constant efficiency at all times of the day.

If the photovoltaic array with independent modules is used outside of the earth's atmosphere, the component materials of the invention - photovoltaic cells, plastic materials, encapsulating resins and electric conduction elements - must be able to withstand the specific ΔT of the space between surface struck by the sunlight and surface in shade (optimal interval: -200°C and +200°C).

### BRIEF DESCRIPTION OF THE DRAWINGS

Further characteristics and advantages of the subject of the present invention will become clearer from an examination of the description of a preferred but non-exclusive embodiment of the invention, illustrated by way of non-limiting example in the attached drawings, in which:

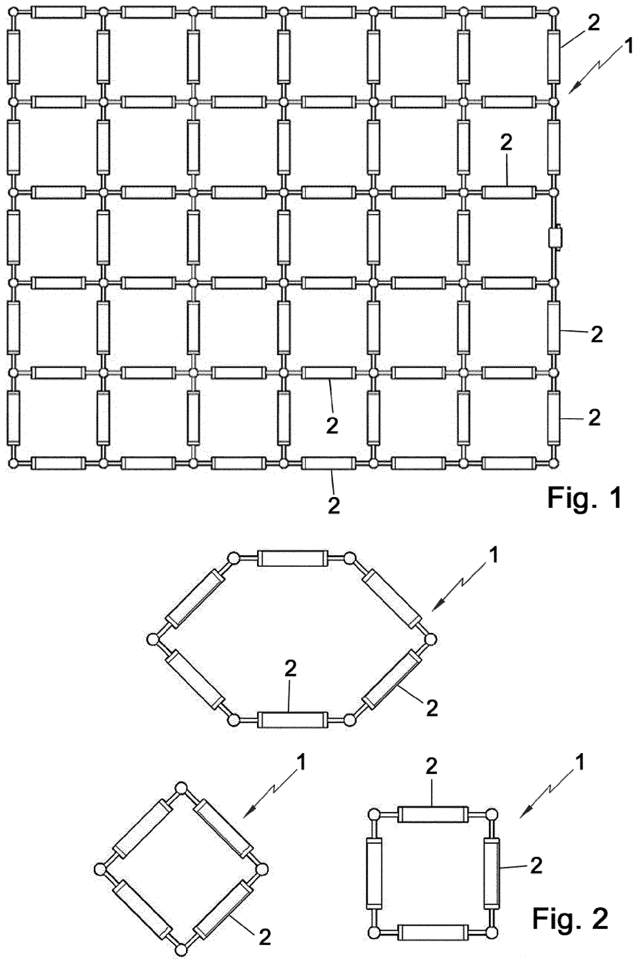

Figure 1 schematically illustrates a portion of the photovoltaic array, according to the invention, in a preferred embodiment;
Figure 2 schematically illustrates some of the possible shapes of the individual meshes that form the photovoltaic array with independent modules of Figure 1;

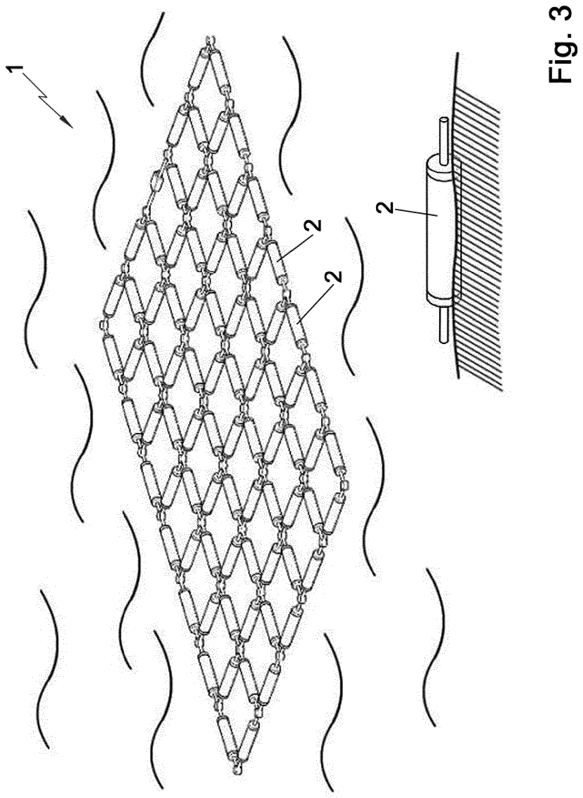

Figure 3 schematically illustrates the modes of floating on water of the individual independent module, as an entire portion of photovoltaic array;
Figure 4 schematically illustrates the base components and the development according to the preferred embodiment of the photovoltaic array with independent modules in its entirety;
Figure 5 schematically illustrates an individual independent photovoltaic module which forms the active part of the photovoltaic array of Figure 1;
Figure 6 schematically illustrates the enlarged structure of the photovoltaic array of Figure 1 indicating the different functional organization of the component modules;
Figure 7 schematically illustrates some preferred configurations of the photovoltaic array with independent modules, according to the three-dimensional (multilayer) configuration with superimposed modules;
Figure 8 schematically illustrates, in a preferred embodiment, the appearance of the individual photovoltaic modules that form the array of Figure 1 in rigid-semirigid and flexible version;
Figure 9 schematically illustrates, in a preferred embodiment, all the components that form the photovoltaic array as a whole;
Figure 10 schematically illustrates the enlargement of the section of an individual photovoltaic module of the array of Figure 1, in a preferred embodiment, in which the hollow nature of the plastic component of said module is highlighted;
Figure 11 schematically illustrates some of the possible polygonal shapes of the plastic support component of the individual independent photovoltaic module;
Figure 12 schematically illustrates the possible combinations of contacts and electrical connections relative to transfer of the electricity produced by the photovoltaic cell inserted in the independent photovoltaic module, both in the traditional configuration by stringing used with mono- or polycrystalline cells, and with solutions having film or conductive membranes in the case of photovoltaic cells of a different nature (organic, amorphous silicon);
Figure 13 schematically illustrates the main layers that form the electrically active component of the independent photovoltaic module and the layer of transparent resin completing and protecting said module;
Figure 14 schematically shows the connection system connecting the independent photovoltaic modules to one another, to form the photovoltaic array as a whole, and the devices provided for anchoring said array to the support on which it is laid;
Figure 15 schematically shows the preferred mechanical locking system for functionally connecting the independent photovoltaic modules to the angular electromechanical connection elements;
Figure 16 schematically shows a section of the enlarged angular element, in the preferred embodiment, highlighting the components for electric connection of the independent photovoltaic modules to one another by means of the angular connection elements;
Figure 17 schematically shows, according to the preferred embodiment, the element of the photovoltaic array with independent modules provided with electric connections designed to transmit to the outside the electric energy produced by the individual production areas into which the array as a whole is split;
Figure 18 schematically shows an example of splitting of electrically active areas of a portion of the photovoltaic array with independent modules, where a linear electric connection module is provided for each area;
Figure 19 schematically shows, in a preferred embodiment, the elements that compose the mechanical anchoring system of the photovoltaic array with independent modules to the support on which it is laid.

### DISCLOSURE OF THE PREFERRED EMBODIMENTS

With particular reference to the numerical symbols of the above-mentioned figures, the photovoltaic array structure, according to the invention, indicated overall by the reference number 1, comprises a plurality of photovoltaic modules 2 connected to one another by electromechanical connection means; each of said modules being a prism with circular or polygonal base and having side faces provided with photovoltaic cells adapted to supply electric power when illuminated by light radiation of any nature, direct, diffused and reflected.

The electromechanical connection means comprise linear mechanical connection elements 31, angular electromechanical connection elements 32, and linear electric jointing elements 33.

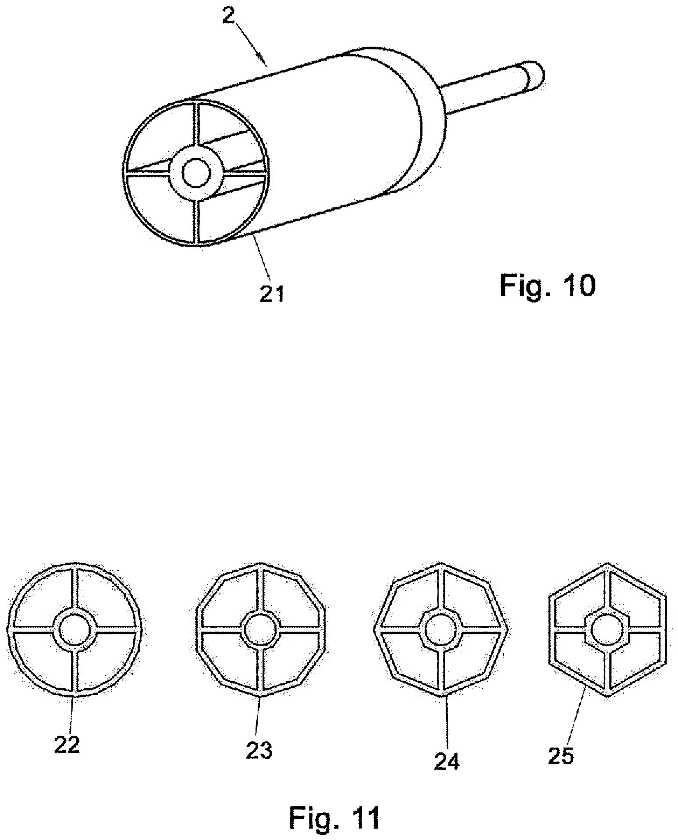

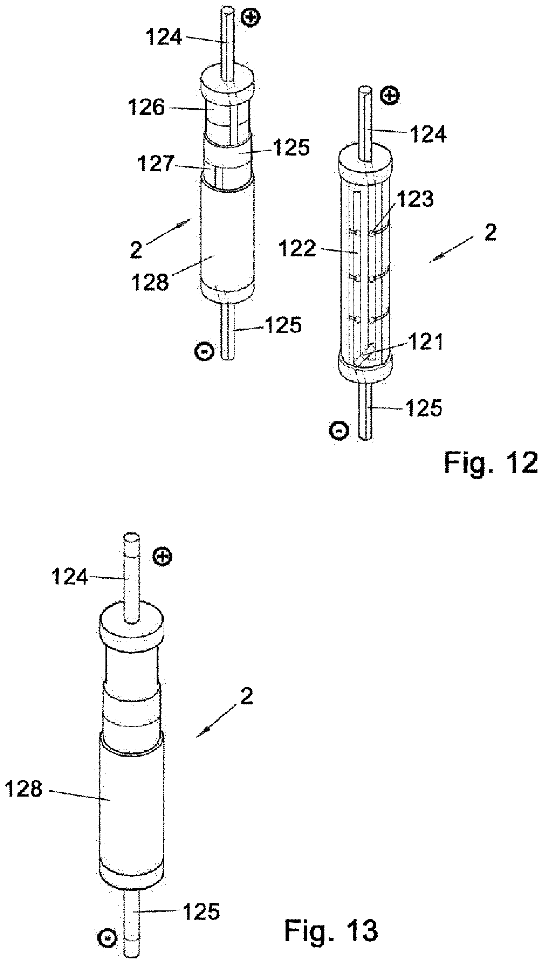

The independent photovoltaic modules 2 comprise hollow cylindrical elements 21, as can be seen in the section of Figure 10, made of plastic material and representing the support, on the curved surfaces of which the photovoltaic cells of various type are applied: mono-polycrystalline silicon, amorphous silicon and organic matrixes, designated by the reference number 125 in Figure 12.

The supporting structure of the photovoltaic cell has a hollow circular or polygonal section, as can be seen in Figure 11 in which supporting structures of various sections are illustrated designated by the reference numbers 22-25.

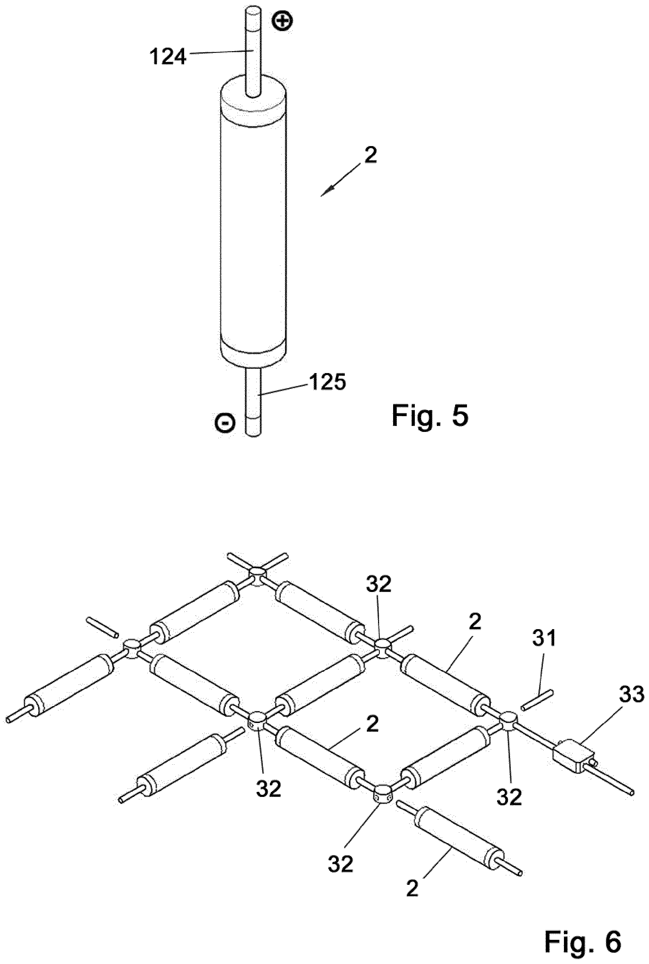

The plastic support 21 is provided with the electric connections required for electric connection of the poles of the photovoltaic cell, designated by the reference numbers 122, 123 in Figure 12, and the independent photovoltaic module with the rest of the system, designated by the reference numbers 124 and 125 in Figures 5 and 12.

The electric connections for connection of the two active faces of the photovoltaic cell that can be used in the invention are multiple and depend on the specific characteristics of the type of cell used; for this reason solutions can be adopted that comprise the use of conductive networks, transparent films with OTC technology, indicated by reference numbers 126 and 127 in Figure 12, such as stringing with ribbon in the case of rigid cells in mono- or polycrystalline silicon, designated by the reference numbers 122 and 123 in Figure 12.

The independent photovoltaic module of the photovoltaic array, once the cell has been applied and the electrical connections established, is completed by casting resin (epoxy and/or polyurethane) in a mould, designated by the reference number 128 in Figures 12 and 13, to encapsulate all the elements that form the independent module, consolidating the electrical and mechanical connections of the system and to protect the photovoltaic cell from impacts and from atmospheric agents, while guaranteeing transparency to solar radiation.

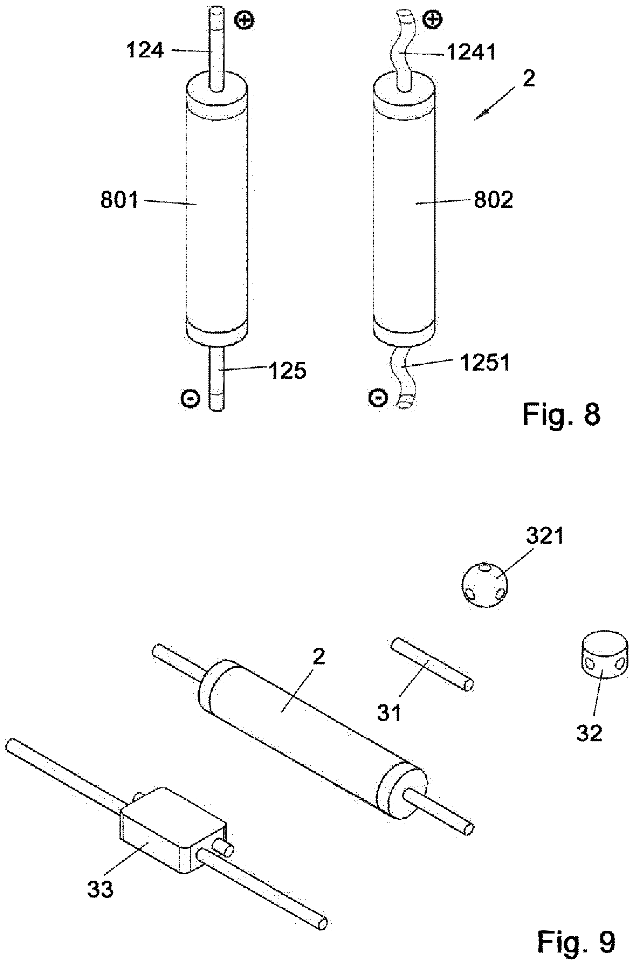

The plastic supports containing the photovoltaic cells and the various electric connections are completed by semirigid components, designated by the reference number 801 in Figure 8, and/or flexible components, designated by the reference number 802 in Figure 8, necessary for the linear electromechanical connection of the individual units to one another to form the photovoltaic array.

The components for the electromechanical connection of the independent photovoltaic modules, in addition to being provided with the double-pole electric connections 124 and 125, to form the electrically productive portions of the photovoltaic array, also have the function of mechanically connecting the photovoltaic array as a whole to the support on which it is laid.

The electrically conductive elements 124 and 125, inserted in the independent photovoltaic module and intended to transmit the electrical energy produced by the cell to the outside of the module, can be connected to each other with a diode 121, shown in Figure 12, to guarantee the electric by-pass action required in the event of malfunctioning of the individual cell to protect against the consequent risk of short circuiting that could compromise the efficiency of the entire system.

The adoption of a safety diode in each independent photovoltaic module makes the use of said diode redundant inside the electric junction box between the photovoltaic array and the absorbing devices of the system such as the inverters.

The linear electromechanical connection components integrated in the independent photovoltaic module can, in the case of a rigid or semirigid solution, be formed of tubular or solid elements made of plastic material, designated by the reference numbers 124 and 125 in Figure 8, in which the electric connections are integrated, made of fibreglass or in any case of a material able to withstand the mechanical loads of the structure and atmospheric agents as well as solar radiation, and provided with electric connections able to transfer the electric energy produced to the outside of the independent photovoltaic module.

The electromechanical connection components integrated in the independent photovoltaic module can, in the case of a flexible solution, be formed of electrically insulated conductive wirings, designated by the reference numbers 1241 and 1251 in Figure 8, able to withstand the mechanical loads of the structure and atmospheric agents as well as solar radiation, and provided with electric connections able to transfer the electric energy produced to the outside of the independent photovoltaic module.

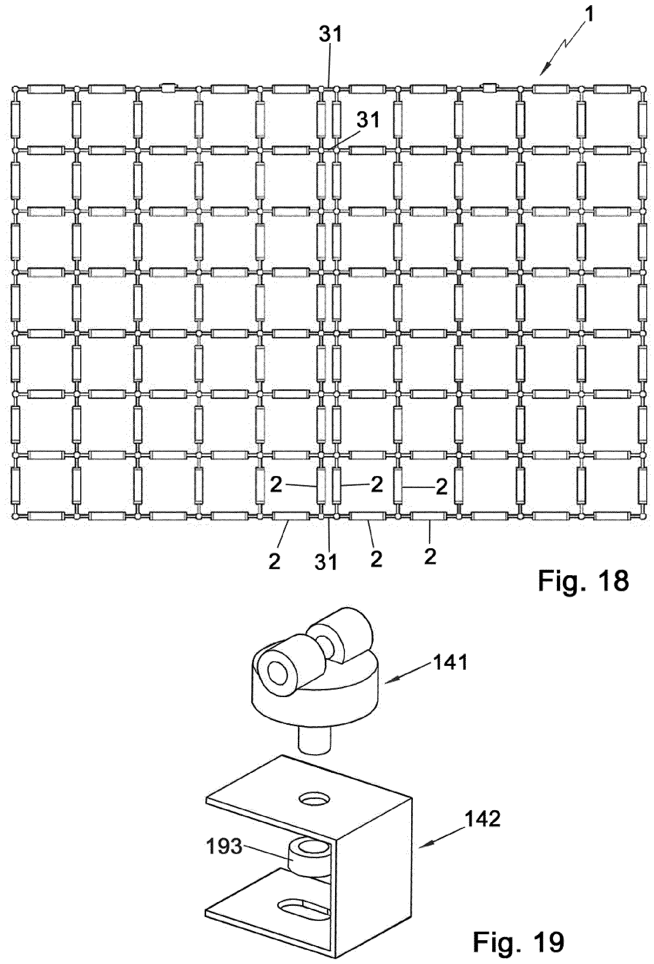

The linear mechanical connection elements 31, without photovoltaic cell and electric contacts, are adapted to maintain the mechanical unity of the photovoltaic array as a whole and to allow the overall system to be split into electrically productive areas, as exemplified in Figure 18, having optimal voltage and power characteristics for the electrical layouts provided for the photovoltaic system as a whole.

The linear mechanical connection elements 31 are made of the same materials and have the same morphologies as those used to produce the electromechanical connection elements of the independent photovoltaic modules 2 both in the semirigid and flexible versions described in the preceding paragraph.

These components have the function of mechanically connecting the photovoltaic array to maintain the overall structural modularity, and simultaneously split it electrically to form discrete portions of the system with precise power and voltage characteristics, as exemplified in Figure 18.

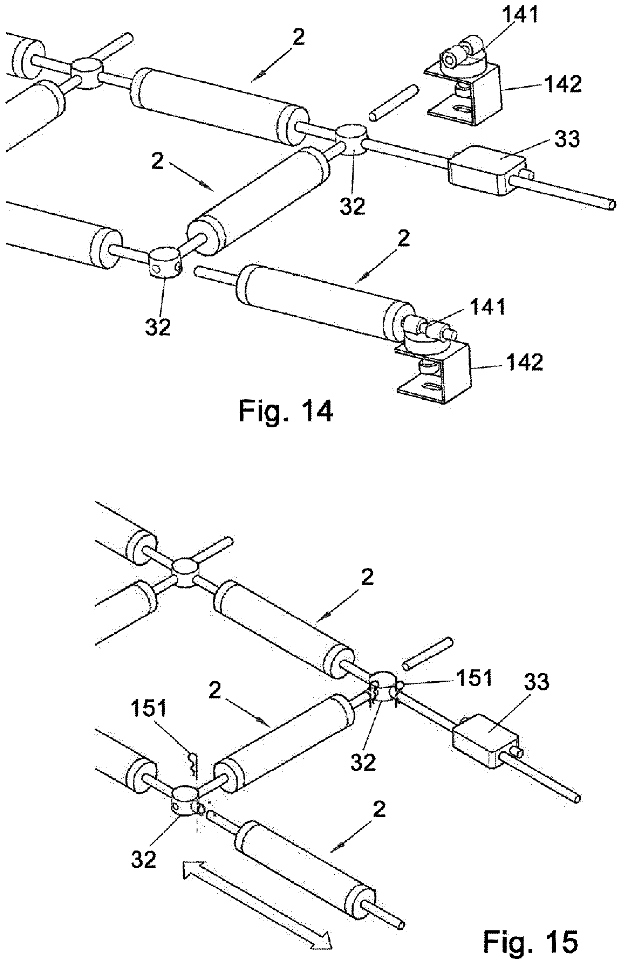

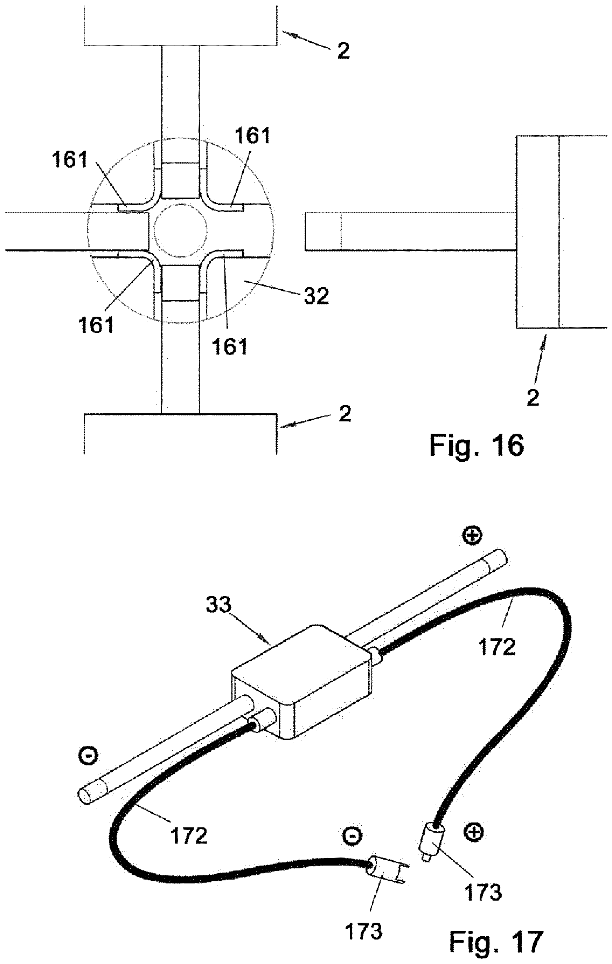

The angular electromechanical connection elements 32 are the same both for the rigid and semirigid version and for the flexible version; these elements, made of plastic material, are provided with housings for insertion and locking of the independent photovoltaic modules, as can be seen in Figures 15 and 16, to allow replacement in the event of failure or malfunctioning, and of the insulated mechanical connection components 31 of the array.

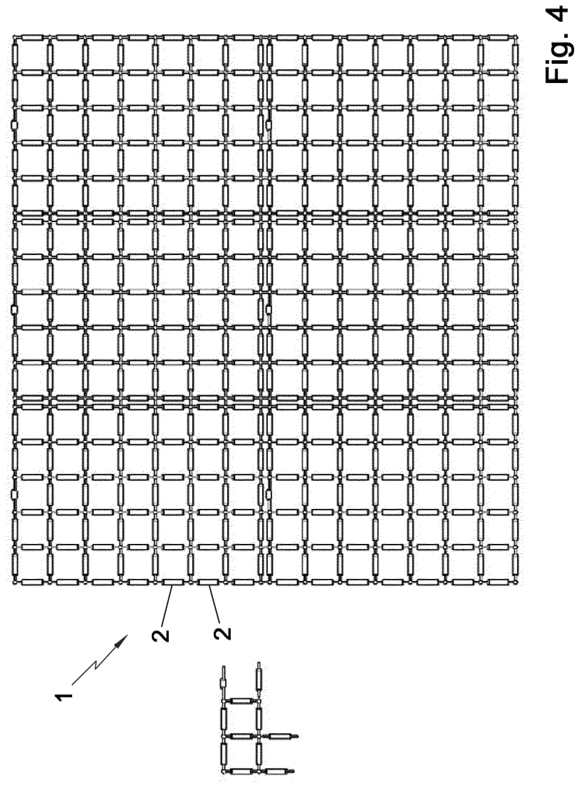

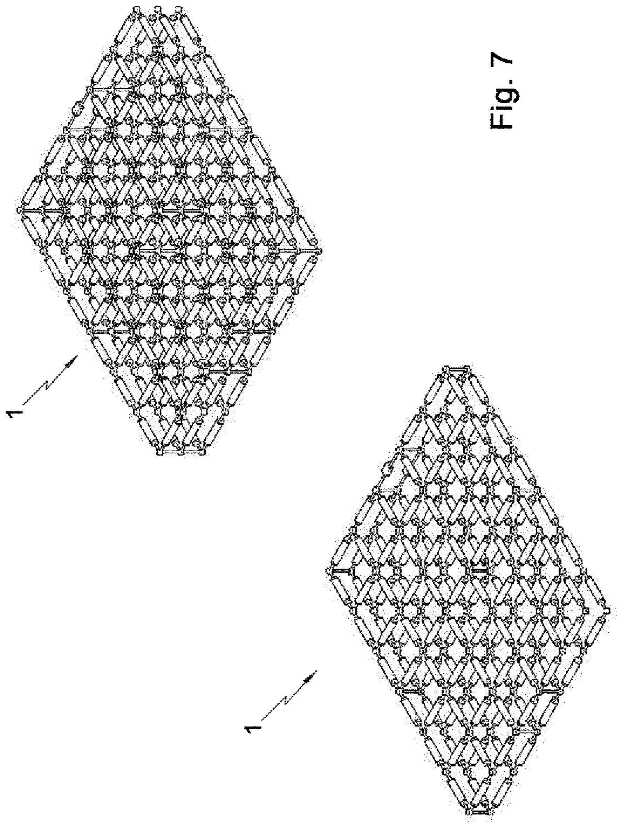

The shape of the angular electromechanical connection elements can be of two types: one flat, designated by the reference number 32 in Figure 9, intended for housing the independent photovoltaic modules for the creation of a photovoltaic array with planar development, as in Figure 4, and one three-dimensional, designated by the reference number 321 in Figure 9, intended for the development of a multilayer photovoltaic array, like those shown in Figure 7.

The angular connection elements 32, 321 of the photovoltaic array, in both the planar and multilayer configurations, in addition to the housings for the independent photovoltaic modules, comprise devices for locking and unlocking the same, designated by the reference number 151 in Figure 15, and also electrically conductive components, designated by the reference number 161 in Figure 16, to allow electrical connection of all the independent photovoltaic modules to one another.

The linear electric connection elements 33 (j-Box illustrated in Figure 17) serve to electrically connect the photovoltaic array, or the individual electric portions forming it, to the devices using the electric energy produced by the system (inverter, electric network, utilization devices, etc.).

For said purpose, further electromechanical connection elements are used which can be inserted in the angular connection elements, designated by the reference number 32 in Figure 15, and able to transfer the electric energy to the outside of the overall photovoltaic system through standard wiring.

These electric connection elements are formed of electromechanical joining elements, illustrated in Figure 17, which comprise an electric junction box 33 in which the electric connections inserted in the semirigid or flexible support are electrically connected to standard coaxial cables 172 which allow the photovoltaic array or the portions thereof to be electrically connected to the external components of the system 173.

The mechanical anchoring of the photovoltaic array to the support or supporting surface is provided by plastic elements, designated by the reference number 141 in Figures 14 and 19, so shaped that they can be inserted in the linear electromechanical connection elements of the independent photovoltaic modules 2 and in the linear mechanical connection elements 31.

These plastic connection elements can be shaped so as to be inserted with an interlock 193, shown in Figure 19, or with final metal elements (screws, bolts or other) into metal brackets 142.

In practice it has been seen that the invention achieves the intended aim and objects.

A photovoltaic array with polygonal mesh is produced comprising a plurality of independent photovoltaic modules adapted to provide electric power when illuminated by a light radiation of any type: direct, diffused and reflected.

Each photovoltaic module is independent and has a cylindrical or in any case prismatic shape, and is made of plastic material with internal cavities.

The surface of the module is covered by the photovoltaic cell.

The nature of the photovoltaic cell of the module, due to the production method of the module at ambient temperature, can be mono-poly crystalline, amorphous or organic.

Each independent photovoltaic module forming the photovoltaic array is provided with a transparent covering to protect the cells, made of resin or other inclusive material for cold and/or hot modelling (not in the case of the organic cells) in moulds or otherwise.

Each independent photovoltaic module forming the photovoltaic array is provided with electric connections to allow the creation of systems in which the individual cells can be connected to one another in series and/or in parallel to form the portions of photovoltaic array.

Each independent photovoltaic module forming the photovoltaic array can be provided with a diode to protect against short circuiting; for this reason, in the event of breakage or malfunctioning of an individual cell, the overall photovoltaic array continues to function correctly without significant drops in power of the system as a whole.

Each independent photovoltaic module forming the photovoltaic array is mechanically and electrically connected to the others so that, in the event of failure, each individual cell forming the photovoltaic array can be replaced.

The photovoltaic array is provided with elements dedicated to discretionary electric connection of the various portions of the electric network to one another and to the utilization point.

The overall structure of the photovoltaic array is self-supporting and floating without the aid of accessory floating structures, furthermore it allows three-dimensional configurations: superimposition of one or more arrays stratified on the same surface, without loss of efficiency between the various layers.

The photovoltaic array can have a semirigid or completely flexible structure, according to the nature of the electric connection elements between the individual photovoltaic modules forming the array.

The photovoltaic array is installed by simple deposition on a surface or dedicated pole-shaped structure, using plastic connection elements and/or anchoring brackets for anchoring to the support. In the case of deposition on water and/or similar, it is sufficient to use point mooring/anchoring elements for direct connection to the array.

Using the electromechanical connection elements of the modules that form the photovoltaic array, three-dimensional systems can be obtained, namely in several layers, where several photovoltaic arrays with different geometries can be superimposed on the same area without causing shading on the lower layers.

The photovoltaic array is an array to all intents and purposes, in fact the photovoltaic elements absorbing the solar radiation, according to the configuration of the invention, constitute only the cords of the three-dimensional array which in turn create a completely empty overall structure which can be crossed by the light.

Each independent photovoltaic module composing the photovoltaic array, having the active photovoltaic matrix wrapped around its own supporting structure, forms each side of the overall photovoltaic array, creating a matrix with repeatable empty frame.

Each independent photovoltaic module forming the photovoltaic array can contain on its surface one or more split or cylindrical/polygonal cells made of mono-poly crystalline silicon, single or multi-junction amorphous cells and organic cells.

Each independent photovoltaic module forming the photovoltaic array, since one or more photovoltaic cells are wrapped around an axis, develops an absorption surface equivalent to that of a traditional photovoltaic cell, with the difference that it is oriented by 360° and therefore able to intercept all manifestations of sunlight in the environment: direct, ambient and reflected.

The photovoltaic array is an array to all intents and purposes, which can be crossed by any atmospheric agent or solid particle present in the environment in which it is placed.

The photovoltaic array allows the creation of self-supporting systems able to minimize the loads on the structure due to the atmospheric agents. In particular: the wind and air cross the structure without encountering flat surfaces, avoiding the sail effect; rain and hail and other corpuscles, the frame shape of the photovoltaic array combined with the cylindrical structure of the cells allow passage of the water and water vapour without creating stagnation and reducing scaling, while in the case of hail or other particles, the curved surfaces of the modular photovoltaic modules combined with the absence of flat surfaces reduce in particular the frequency and intensity of possible critical impacts.

Due to the characteristics described in the preceding point, the photovoltaic array is suitable for use in the presence of snow since the system without surfaces does not entail any additional weight on the supporting structure, allowing the snow covering to pass through and deposit in a natural manner.

The photovoltaic array according to the present invention, since it uses optimal raw materials for creation of the structure and the transparent encapsulating resin, able to withstand the ΔT present in space, is suited to use in the aerospace sector, because with the same absorption photovoltaic surface as a traditional photovoltaic panel, it forms only a curved frame structure in space, considerably reducing the collisions due to micrometeorites and other free micro debris present in space especially in the vicinity of the earth's orbit.

A system produced with the photovoltaic array according to the present invention constitutes an uninterrupted array on a surface or support of any type, directly in the ground or on water, and the overall system can be electrically organized and modulated as required by simple introduction of the electric connection modules at the desired electric power fractions.

The type of joints that electromechanically connect the individual photovoltaic modules forming the array allows the continuous array of the system to be split into individual units with the desired electric power so as to optimize organization of the general electric system: inverter and array.

The photovoltaic array, as a whole and in its modular components, consists entirely of plastic elements excluding the photovoltaic absorbing elements and the electric conductors. Its structure does not contain any glass or metallic component, therefore the entire photovoltaic array can be 95% recycled as plastic.

The photovoltaic array can consist mainly of plastic elements lighter than water and the individual photovoltaic modules have a hollow structure, therefore the overall weight of the self-supporting structure of a system produced according to the invention is greatly reduced, allowing use on lightweight surfaces and roofs without substantially increasing the loads of the overall structure.

The photovoltaic array according to the present invention can be produced with practically zero environmental impact, since it is only a plurality of empty frames that can be crossed by any environmental agent; in addition, the extremely limited weight combined with the lack of any supporting structure, as indicated in the preceding point, make the photovoltaic system of the invention ideal for use in any context.

In an urban context, the photovoltaic array lends itself to covering roofs or vertical and inclined walls of existing buildings, with low visual impact and weights compatible with the particular structural features of historic and urban buildings in general.

In an agricultural context, the photovoltaic array according to the invention can be used in the open field in various configurations: laid on the ground, mounted on trellis structures, to cover glasshouses or other agricultural buildings, and laid on ponds or other water basins (rivers, lakes, etc.).

However used, the photovoltaic array, due to its particular features, operates synergically with the underlying ground or surface, allowing any atmospheric agent to pass onto the ground below the system.

Each individual module forming the photovoltaic array can be provided with a light trapping film to further increase the overall system efficiency. The light trapping film can be inserted during the work phase, wrapped around the outer surfaces of the cells and incorporated in the encapsulating resin.

Naturally almost any materials and dimensions can be used, according to requirements.

## Claims

1. A photovoltaic array structure with independent modules, comprising a plurality of independent photovoltaic modules (2) connected to one another by electromechanical connection means (31, 32, 33); each of said independent photovoltaic modules (2) comprising a prismatic body with a polygonal or circular base and having side faces provided with photovoltaic cells intended to provide electric power when illuminated by light radiation of any nature, direct, diffused and reflected; said independent photovoltaic modules (2) comprising tubular elements (21, 22, 23, 24, 25) made of plastic material constituting the support on the surfaces of which the photovoltaic cells are applied, the photovoltaic array structure further comprising linear electromechanical connection elements (124, 125; 1241, 1251) integrated in the ends of each said independent photovoltaic module (2), made in fibreglass or in any material capable of withstanding mechanical loads of the structure and the atmospheric agents as well as solar radiation, and provided with electrical connections capable of transferring the electrical energy produced to the outside of the independent photovoltaic modules (2), each said independent photovoltaic module (2) comprising a layer of epoxy and/or polyurethane resin (128) that encapsulates all of the elements that form the independent photovoltaic module (2), including the photovoltaic cells and the electric connections, so as to consolidate the electrical and mechanical connections of the system and to protect the photovoltaic cell from impacts and from atmospheric agents while guaranteeing transparency to solar radiation.

2. The photovoltaic array structure, according to claim 1, **characterised in that** said independent photovoltaic modules (2) comprise hollow cylindrical elements (21).

3. The photovoltaic array structure, according to claim 1, **characterised in that** said electromechanical connection means comprise linear mechanical connection elements (31), angular electromechanical connection elements (32), and linear electric jointing elements (33).

4. The photovoltaic array structure, according to claim 1, **characterised in that** said independent photovoltaic module comprises a diode (121) for connecting electrically conductive elements (124, 125) inserted in said independent photovoltaic module and intended to transmit the electricity produced by the cell to the outside of the module itself; said diode (121) carrying out an electric bypass action required in case of malfunctioning of the individual cell in order to protect against the consequent short-circuit risk that could compromise the efficiency of the entire system.

5. The photovoltaic array structure, according to one or more of the preceding claims, **characterised in that** it comprises angular electromechanical jointing elements (32, 321), made of plastic material and provided with housings for the insertion and locking of the independent photovoltaic modules; the shape of the angular electromechanical jointing elements can be of two types: a flat (32) configuration, designed to house the independent photovoltaic modules in order to achieve a photovoltaic array with a planar development, and a three-dimensional (321) configuration, designed to develop a multilayer photovoltaic array.

6. The photovoltaic array structure, according to one or more of the preceding claims, **characterised in that** said angular jointing elements (32, 321) of the photovoltaic array, both in the planar configuration and the multilayer configuration, in addition to the housings for the independent photovoltaic modules, comprise devices (151) for locking and unlocking of the same, and also electrically conductive components (161), to allow the electrical connection of all the independent photovoltaic modules to one another.

7. The photovoltaic array structure, according to one or more of the preceding claims, **characterised in that** said linear electric jointing elements (33) electrically connect the photovoltaic array or the individual electric portions that form the latter to the devices for the use of the electrical energy produced by the system; said structure further comprising electromechanical connection elements that can be inserted into the angular jointing elements (32) and capable of transferring electrical energy to the outside of the photovoltaic system as a whole through standard wiring; said electric connection elements comprising electromechanical jointing elements that comprise an electric junction box (33) wherein the electrical connections inserted in the flexible or semirigid support are electrically connected to coaxial cables (172) which allow the photovoltaic array or its portions to be electrically connected to the external components of the system (173).

8. The photovoltaic array structure, according to one or more of the preceding claims, **characterised in that** it comprises mechanical means for anchoring the photovoltaic array to a support or support surface; said means comprising plastic elements (141) so shaped that they can be inserted on the linear electromechanical jointing elements of the independent photovoltaic modules (2) and can be inserted in the linear mechanical jointing elements (31); said jointing plastic elements (141) being shaped so as to be inserted with an interlock (193) or with final metal elements, such as screws or bolts, into metal brackets (142).

## Patentansprüche

1. Eine photovoltaische Paneelstruktur mit unabhängigen Modulen, welche eine Vielzahl unabhängiger photovoltaischer Module (2) umfasst, die jeweils durch elektromechanische Anschlusselemente (31, 32, 33) miteinander verbunden sind; wobei jedes der genannten unabhängigen photovoltaischen Module (2) einen prismenförmigen Körper mit einer polygonalen oder kreisförmigen Basis umfasst und Seitenflächen aufweist, welche jeweils mit photovoltaischen Zellen ausgerüstet sind, um bei Beleuchtung durch Lichteinstrahlung beliebiger Natur, direkt, diffus und reflektiert, Strom zu liefern, wobei die genannten unabhängigen photovoltaischen Module (2) jeweils röhrenförmige Elemente (21, 22, 23, 24, 25) aus Kunststoffmaterial umfassen, die die entsprechende Halterung auf den Oberflächen bilden, auf den sich die photovoltaischen Zellen befinden, wobei die photovoltaische Paneelstruktur desweiteren lineare elektromechanische Anschlusselemente (124, 125, 1241, 1251) umfasst, welche an den Enden jedes genannten unabhängigen photovoltaischen Moduls (2) eingebaut sind und die aus Glasfaser oder einem beliebigen anderen Material bestehen, das in der Lage ist, den mechanischen Lasten der Struktur und den Witterungseinflüssen sowie der Sonnenbestrahlung zu widerstehen, und die mit elektrischen Anschlüssen ausgestattet sind, welche die erzeugte elektrische Energie zur Außenseite der unabhängigen photovoltaischen Module (2) übertragen können, wobei jedes der genannten unabhängigen photovoltaischen Module (2) eine Schicht Epoxid- und/oder Polyurethanharzschicht (128) umfasst, welche sämtliche Elemente einkapselt, die die unabhängigen photovoltaischen Module (2) bilden, einschließlich der photovoltaischen Zellen und elektrischen Anschlüsse, so dass die elektrischen und mechanischen Anschlüsse des Systems konsolidiert und die photovoltaische Zelle vor Aufschlägen und Witterungseinflüssen bei gleichzeitiger Garantie der Transparenz für die Sonneneinstrahlung geschützt wird.

2. Die photovoltaische Paneelstruktur gemäß Anspruch 1, **dadurch gekennzeichnet, dass** die genannten unabhängigen photovoltaischen Module (2) hohle zylindrische Elemente (21) umfassen.

3. Die photovoltaische Paneelstruktur gemäß Anspruch 1, **dadurch gekennzeichnet, dass** die genannten elektromechanischen Anschlusselemente lineare mechanische Anschlusselemente (31), eckige elektromechanische Anschlusselemente (32) und lineare elektrische Verbindungselemente (33) umfassen.

4. Die photovoltaische Paneelstruktur gemäß Anspruch 1, **dadurch gekennzeichnet, dass** das genannte unabhängige photovoltaische Modul eine Diode (121) zum Anschließen elektrisch leitender Elemente (124, 125) umfasst, welche in dem genannten unabhängigen photovoltaischen Modul eingebaut und dazu bestimmt sind, den von der Zelle erzeugten Strom zur Außenseite des Moduls selbst zu senden; wobei die genannte Diode (121) eine elektrische Umleitung durchführt, die im Fall von Störungen einer einzelnen Zelle erforderlich ist, um vor der darauf folgenden Gefahr eines Kurzschlusses zu schützen, welcher die Leistungsfähigkeit des gesamten Systems gefährden könnte.

5. Die photovoltaische Paneelstruktur gemäß einem oder mehreren der vorausgegangenen Ansprüche, **dadurch gekennzeichnet, dass** sie eckige elektromechanische Verbindungselemente (32, 321) aus Kunststoffmaterial umfasst und mit entsprechenden Gehäusen für den Einsatz und die Verriegelung der unabhängigen photovoltaischen Module ausgerüstet ist; wobei die Form der eckigen elektromechanischen Verbindungselemente jeweils zwei Bauarten vorsehen kann: eine flache (32) Konfiguration, die dazu bestimmt ist, die unabhängigen photovoltaischen Module so unterzubringen, dass eine photovoltaische Paneelstruktur mit einer ebenen Ausrichtung erreicht wird, und eine dreidimensionale (321) Konfiguration, die dazu bestimmt ist, eine vielschichtige photovoltaische Paneelstruktur zu erzielen.

6. Die photovoltaische Paneelstruktur gemäß einem oder mehreren der vorausgegangenen Ansprüche, **dadurch gekennzeichnet, dass** die genannten eckigen Verbindungselemente (32, 321) der photovoltaischen Paneelstruktur, und zwar jeweils sowohl in der ebenflächigen wie in der Vielschichtkonfiguration, zusätzlich zu den Gehäusen für die unabhängigen photovoltaischen Module, jeweils entsprechende Vorrichtungen (151) zu deren Ver- und Entriegelung umfassen, sowie ebenso elektrisch leitende Komponenten (161), um die elektrische Verbindung aller unabhängigen photovoltaischen Module miteinander zu ermöglichen.

7. Die photovoltaische Paneelstruktur gemäß einem oder mehreren der vorausgegangenen Ansprüche, **dadurch gekennzeichnet, dass** die genannten linearen elektrischen Verbindungselemente (33) die photovoltaische Paneelstruktur oder die einzelnen elektrischen Abschnitte, welche die letzteren bilden, elektrisch mit den Vorrichtungen für die Nutzung der elektrischen Energie verbinden, welche durch das System erzeugt wird; wobei die genannte Struktur desweiteren elektromechanische Anschlusselemente umfasst, die in die eckigen Verbindungselemente (32) eingesetzt werden können und in der Lage sind, die elektrische Energie zur Außenseite des gesamten photovoltaischen Systems mittels Standardverdrahtung zu befördern; wobei die genannten elektrischen Anschlusselemente elektromechanische Verbindungselemente umfassen, welche wiederum einen Stromverteilerkasten (33) umfassen, in dem die elektrischen Anschlüsse, die in die flexible oder halbstarre Halterung eingesetzt sind, jeweils elektrisch mit entsprechenden koaxialen Kabeln (172) verbunden sind, welche die photovoltaische Paneelstruktur oder deren Abschnitte in die Lage versetzen, elektrisch mit den äußeren Komponenten des Systems (173) verbunden zu sein.

8. Die photovoltaische Paneelstruktur gemäß einem oder mehreren der vorausgegangenen Ansprüche, **dadurch gekennzeichnet, dass** sie jeweils entsprechende mechanische Elemente zur Verankerung der photovoltaischen Paneelstruktur an einer Halterung oder Halterungsoberfläche umfasst; wobei die genannten Elemente jeweils Kunststoffelemente (141) umfassen, welches so geformt sind, dass sie jeweils in die linearen elektromechanischen Verbindungselemente der unabhängigen photovoltaischen Module (2) und in die linearen mechanischen Verbindungselemente (31) eingesetzt werden können; wobei die genannten Kunststoff-Verbindungselemente (141) so geformt sind, dass sie mit einer entsprechenden Verriegelungseinrichtung (193) oder mit End-Metallelementen wie Schrauben oder Bolzen jeweils in entsprechende Metallklammern (142) eingesetzt werden können.

## Revendications

1. Structure de panneaux photovoltaïques avec des modules indépendants, comprenant une pluralité de modules photovoltaïques indépendants (2) reliés les uns aux autres par des moyens de liaison électromécanique (31, 32, 33); chacun desdits modules photovoltaïques indépendants (2) comprenant un corps prismatique avec une base polygonale ou circulaire et ayant des faces latérales pourvues de cellules photovoltaïques destinées à fournir de la puissance électrique lorsqu'elles sont illuminées par un rayonnement lumineux d'une nature quelconque, qu'il soit direct, diffus et réfléchi; lesdits modules photovoltaïques indépendants (2) comprenant des éléments tubulaires (21, 22, 23, 24, 25) faits en matière plastique qui constituent le support sur les surfaces duquel les cellules photovoltaïques sont appliquées, la structure de panneaux photovoltaïques comprenant en outre des éléments de liaison électromécanique linéaires (124, 125; 1241, 1251) intégrés aux extrémités de chacun desdits modules photovoltaïques indépendants (2), faits en fibre de verre ou en matériau quelconque capables de résister aux charges mécaniques de la structure et aux agents atmosphériques, ainsi qu'au rayonnement solaire, et pourvus de liaisons électriques capables de transférer l'énergie électrique produite à l'extérieur des modules photovoltaïques indépendants (2), chacun desdits modules photovoltaïques indépendants (2) comprenant une couche de résine époxy et/ou polyuréthane (128) qui encapsule tous les éléments qui forment le module photovoltaïque indépendant (2), y compris les cellules photovoltaïques et les liaisons électriques, de manière à renforcer les liaisons électriques et mécaniques du système et à protéger la cellule photovoltaïque contre les impacts et les agents atmosphériques tout en garantissant de la transparence au rayonnement solaire.

2. Structure de panneaux photovoltaïques, selon la revendication 1, **caractérisée en ce que** lesdits modules photovoltaïques indépendants (2) comprennent des éléments cylindriques creux (21).

3. Structure de panneaux photovoltaïques, selon la revendication 1, **caractérisée en ce que** lesdits moyens de liaison électromécanique comprennent des éléments de liaison mécanique linéaires (31), des éléments de liaison électromécanique angulaires (32) et des éléments de raccordement électrique linéaires (33).

4. Structure de panneaux photovoltaïques, selon la revendication 1, **caractérisée en ce que** lesdits modules photovoltaïques indépendants comprennent une diode (121) pour relier électriquement des éléments conducteurs (124, 125) insérés dans ledit module photovoltaïque indépendant et destinée à transmettre l'électricité produite par la cellule à l'extérieur du même module; ladite diode (121) effectuant une action de bypass électrique requise en cas de dysfonctionnement de la cellule individuelle afin de parer au risque du court-circuit qui en résulte qui pourrait compromettre l'efficacité de tout le système.

5. Structure de panneaux photovoltaïques, selon l'une ou plusieurs des revendications précédentes, **caractérisée en ce qu'**elle comprend des éléments de raccordement électromécanique angulaires (32, 321), faits en matière plastique et pourvus de logements pour l'insertion et le verrouillage des modules photovoltaïques indépendants; la forme des éléments de raccordement électromécanique angulaires peut être de deux types: une configuration plate (32), conçue pour loger les modules photovoltaïques indépendants afin d'obtenir des panneaux photovoltaïques avec un développement planaire, et une configuration tridimensionnelle (321), conçue pour développer des panneaux photovoltaïques multicouches.

6. Structure de panneaux photovoltaïques, selon l'une ou plusieurs des revendications précédentes, **caractérisée en ce que** lesdits éléments de raccordement angulaires (32, 321) des panneaux photovoltaïques, dans les configurations à la fois planaire et multicouche, outre les logements pour les modules photovoltaïques indépendants, comprennent des dispositifs (151) pour le verrouillage et le déverrouillage de ceux-ci, ainsi que des composants électriquement conducteurs (161), pour permettre la liaison électrique de tous les modules photovoltaïques indépendants les uns aux autres.

7. Structure de panneaux photovoltaïques, selon l'une ou plusieurs des revendications précédentes, **caractérisée en ce que** lesdits éléments de raccordement électrique linéaires (33) relient électriquement les panneaux photovoltaïques ou les parties électriques individuelles qui forment ces derniers aux dispositifs en vue de l'exploitation de l'énergie électrique produite par le système; ladite structure comprenant en outre des éléments de liaison électromécanique qui peuvent être insérés dans les éléments de raccordement angulaires (32) et capables de transférer l'énergie électrique à l'extérieur du système photovoltaïque dans son ensemble par l'intermédiaire d'un câblage standard; lesdits éléments de liaison électrique comprenant des éléments de raccordement électromécanique qui comprennent une boîte de jonction électrique (33) dans laquelle les liaisons électriques insérées dans le support flexible ou semi-rigide sont reliées électriquement à des câbles coaxiaux (172) qui permettent aux panneaux photovoltaïques ou à leurs parties d'être reliés électriquement aux composants extérieurs du système (173).

8. Structure de panneaux photovoltaïques, selon l'une ou plusieurs des revendications précédentes, **caractérisée en ce qu'**elle comprend des moyens mécaniques pour ancrer les panneaux photovoltaïques à un support ou à une surface de support; lesdits moyens comprenant des éléments en matière plastique (141) façonnés de manière à pouvoir être insérés sur les éléments de raccordement électromécanique linéaires des modules photovoltaïques indépendants (2) et à pouvoir être insérés dans les éléments de raccordement mécanique linéaires (31); lesdits éléments en matière plastique de raccordement (141) étant façonnés de manière à être insérés avec un interverrouillage (193) ou avec des éléments métalliques finaux, tels que des vis ou des boulons, dans des plaques-supports métalliques (142).
